# EUROPÄISCHE PATENTSCHRIFT

(11) **EP 2 627 477 B1**
(45) Veröffentlichungstag und Bekanntmachung des Hinweises auf die Patenterteilung: **25.03.2015**
(21) Anmeldenummer: 11767257.6
(22) Anmeldetag: 11.10.2011
(51) Int. Cl.: B24B 23/04, B24B 41/00, B25F 5/00

(54) **HANDWERKZEUGMASCHINE**
HAND-HELD MACHINE TOOL
MACHINE-OUTIL À MAIN

(30) Priorität: 14.10.2010 DE 102010042452
(43) Veröffentlichungstag der Anmeldung: 21.08.2013
(73) Patentinhaber: Robert Bosch GmbH, 70442 Stuttgart (DE)
(72) Erfinder: CHRISTEN, Stefan, CH-5425 Schneisingen (CH); MATHYS, Thomas, CH-3250 Lyss (CH)
(86) Internationale Anmeldenummer: PCT/EP2011/067698
(87) Internationale Veröffentlichungsnummer: WO 2012/049155

(56) Entgegenhaltungen:
- EP-A2- 0 849 492
- WO-A1-94/19152
- DE-A1-102005 061 870
- US-A- 4 905 772

## Beschreibung

Die Erfindung bezieht sich auf eine Handwerkzeugmaschine, insbesondere ein Schleifgerät wie beispielsweise einen Exzenterschleifer oder einen Schwingschleifer, nach dem Oberbegriff des Anspruches 1.

### Stand der Technik

In der DE 10 2006 034 078 A1 wird eine Schleifhandwerkzeugmaschine beschrieben, die eine Vibrationsentkopplungsvorrichtung aufweist, über die der Handgriff vom Gehäuse mit der Antriebseinheit schwingungsentkoppelt ist. Der Handgriff bildet ein separat ausgebildetes Gehäuseteil, das über die Vibrationsentkopplungsvorrichtung mit dem die Antriebseinheit aufnehmenden weiteren Gehäuseteil verbunden ist. Die Antriebseinheit umfasst einen elektrischen Antriebsmotor sowie eine Übertragungseinrichtung zur Übertragung der Antriebsbewegung auf das Schleifwerkzeug. Im Betrieb der Handwerkzeugmaschine entstehen bei der Werkstückbearbeitung sowie im Antrieb Schwingungen und Vibrationen, die sich in das Gehäuse fortpflanzen, wobei über die Vibrationsentkopplungseinrichtung eine wirksame Dämpfung der Schwingungen sowie Vibrationen und eine Entkopplung im Handgriff erreicht wird.

Die Vibrationsentkopplungsvorrichtung umfasst biegeelastische Säulenelemente, die zwischen dem Handgriff und dem Gehäuseteil angeordnet sind, welches die Antriebseinheit aufnimmt. Die Vibrationsentkopplungsvorrichtung muss so ausgelegt sein, dass weder durch Materialalterung noch bei starker Belastung der Handwerkzeugmaschine ein unmittelbarer Kontakt zwischen dem die Antriebseinheit aufnehmenden Gehäuseteil und dem Handgriff auftritt.

Die EP 0 849 492 A2 zeigt ein Schleifgerät, das in einem Maschinengehäuse einen elektrischen Antriebsmotor mit einem Motorgehäuse aufweist, welches über Dämpfungselemente an der Innenseite des Maschinengehäuses abgestützt ist. Die Dämpfungselemente weisen zwei parallele, flexible Platten auf, die zwischen Endscheiben eingespannt sind.

### Offenbarung der Erfindung

Der Erfindung liegt die Aufgabe zugrunde, mit einfachen Maßnahmen eine wirksame Vibrationsentkopplung zwischen der Antriebseinheit einer Handwerkzeugmaschine und dem Handgriff sicherzustellen.

Diese Aufgabe wird erfindungsgemäß mit den Merkmalen des Anspruches 1 gelöst. Die Unteransprüche geben zweckmäßige Weiterbildungen.

Die erfindungsgemäße Handwerkzeugmaschine wird zur spanenden Bearbeitung eines Werkstückes eingesetzt. Bei der Handwerkzeugmaschine handelt es sich bevorzugt um ein Schleifgerät, insbesondere einen Exzenterschleifer oder einen Schwingschleifer. Die Handwerkzeugmaschine weist in einem Maschinengehäuse eine Antriebseinheit auf, die einen Antriebsmotor sowie eine Übertragungseinrichtung zum Antreiben eines Werkzeugs umfasst. Zur Schwingungsreduzierung ist im Maschinengehäuse ein Dämpfungselement im Übertragungsweg zwischen der Antriebseinheit und einem Gehäuseteil angeordnet.

Erfindungsgemäß ist vorgesehen, dass das Dämpfungselement unmittelbar zwischen dem Motorgehäuse des Antriebsmotors und dem Maschinengehäuse angeordnet ist und zugleich ein Trägerelement zum Halten und Abstützen des Antriebsmotors im Maschinengehäuse bildet. Dem Dämpfungselement kommen somit zwei Funktionen zu, nämlich zum einen die schwingungsreduzierende Wirkung und zum andern eine das Motorgehäuse tragende Funktion. Auf diese Weise wird eine konstruktive Vereinfachung des Maschinengehäuses erreicht, da kein speziell zur Aufnahme des Antriebsmotors ausgelegtes Gehäuseteil erforderlich ist. Es bestehen dadurch zusätzliche Gestaltungsmöglichkeiten im Hinblick auf die Konstruktion der Handwerkzeugmaschine.

Des Weiteren ist sichergestellt, dass auch unter hoher Belastung kein direkter Kontakt zwischen dem Motorgehäuse des Antriebsmotors und dem Maschinengehäuse entsteht. Hierzu ist der Antriebsmotor vorzugsweise ausschließlich über die Dämpfungselemente im Maschinengehäuse gehalten. Erreicht werden kann dies in bevorzugter Ausführung dadurch, dass das Dämpfungselement in mindestens zwei verschiedene Richtungen Kräfte überträgt und damit auch in diese Richtungen zu einer Vibrationsentkopplung beiträgt.

Gemäß einer alternativen Ausführung kann es aber auch zweckmäßig sein, die Dämpfungselemente mit Verbindungselementen zu kombinieren, über die das Motorgehäuse mit dem Maschinengehäuse verbunden ist. Bei dieser Ausführung erfolgt die Anordnung der Verbindungs- und Dämpfungselemente vorzugsweise derart, dass in mindestens eine Richtung ausschließlich eine Verbindung über das Dämpfungselement und in einer weiteren Richtung das zusätzliche Verbindungselement wirksam ist, so dass die Vibrationsentkopplung zumindest in der Richtung erfolgt, in welcher das Dämpfungselement wirksam ist.

Als Antriebsmotor wird vorzugsweise ein Elektromotor eingesetzt. Dementsprechend handelt es sich bei dem Motorgehäuse um ein Polgehäuse, an dem ein oder mehrere Dämpfungselemente zur Abstützung gegenüber dem Maschinengehäuse angreifen. In einer weiteren vorteilhaften Ausführung kann auch ein mit Druckluft betriebener Antriebsmotor eingesetzt werden.

Gemäß zweckmäßiger weiterer Ausbildung ist vorgesehen, dass über den Umfang verteilt mehrere Dämpfungselemente zwischen dem Motorgehäuse und dem Maschinengehäuse angeordnet sind. Auf diese Weise wird eine allseitige Abstützung und wirksame Schwingungsentkopplung zwischen dem Motorgehäuse und dem Maschinengehäuse erzielt.

Gemäß der Erfindung ist vorgesehen, dass mindestens ein Dämpfungselement als ein kompakter Dämpfungsblock ausgebildet ist. Der Dämpfungsblock ist insbesondere als Mehrkantblock ausgeführt, was den Vorteil hat, dass ebene Flächen zur Abstützung gegenüber dem Motorgehäuse und/oder Maschinengehäuse gegeben sind. Aufgrund der kompakten Ausführung des Dämpfungselementes kann dieses auch hohe Kräfte übertragen und ist somit auch für den Einsatz unter hohen Belastungen geeignet.

Grundsätzlich kommen für das Dämpfungselement sowohl ebene als auch gewölbte Flächen in Betracht, über die das Dämpfungselement auf Kontakt zum Motorgehäuse und/oder Maschinengehäuse liegt.

Mehrere Dämpfungselemente, welche das Motorgehäuse gegenüber dem Maschinengehäuse abstützen und halten, sind entweder als Einzelelemente ausgeführt oder erfindungsgemäß zusammenhängend, an einem verbindenden Trägerring gehalten. Der Trägerring kann um das Motorgehäuse gelegt werden, wodurch sich insbesondere bei der Montage Vorteile ergeben. Der Trägerring ist gegebenenfalls aus einem dämpfenden Material hergestellt.

Des Weiteren kann es zweckmäßig sein, mindestens ein Dämpfungselement in eine Aufnahmevorrichtung einzusetzen, die im Motorgehäuse und/oder im Maschinengehäuse angeordnet ist. Die Aufnahmevorrichtung kann sowohl für einzeln ausgeführte Dämpfungselemente als auch für über einen Trägerring miteinander verbundene Dämpfungselemente eingesetzt werden. Die Aufnahmevorrichtungen besitzen insbesondere einen an die Dämpfungselemente angepassten Grundquerschnitt mit seitlich überstehenden Wandungen, so dass zum einen eine sichere Aufnahme der Dämpfungselemente in den Aufnahmevorrichtungen gegeben und zum andern nicht nur eine Kraftübertragung in Radialrichtung zum Motorgehäuse möglich ist, sondern auch in Richtung der Längsachse bzw. in Querrichtung. Des Weiteren können die seitlich überstehenden Elemente als Montagehilfe dienen.

Um die Halterung der Dämpfungselemente zu verbessern, kann es zweckmäßig sein, zumindest eines der Dämpfungselemente mit einer Ausnehmung zu versehen, wobei die Aufnahmevorrichtung einen Zentrierstift umfasst, auf den das Dämpfungselement aufschiebbar ist. Der Zentrierstift erleichtert die Montage und ermöglicht darüber hinaus eine gesteigerte Kraftübertragung in mehrere Richtungen, also sowohl radial zur Motorlängsachse als auch in Achsrichtung bzw. in Querrichtung.

Gegebenenfalls erfolgt eine Kombination von Aufnahmevorrichtungen und Zentrierstiften, insbesondere dergestalt, dass innerhalb der Aufnahmevorrichtung ein Zentrierstift angeordnet ist, auf den das Dämpfungselement, welches mit einer Ausnehmung versehen ist, aufgeschoben werden kann.

Die Aufnahmevorrichtungen und/oder die Zentrierstifte befinden sich entweder nur am Motorgehäuse oder nur am Maschinengehäuse oder an beiden Gehäusen.

Da die Vibrationsentkopplung zwischen dem Motorgehäuse und dem Maschinengehäuse erfolgt, kann das Maschinengehäuse einschließlich Handgriff einteilig ausgeführt sein. Es ist nicht erforderlich, den Handgriff separat auszubilden und gegenüber dem zentralen Gehäuse der Handwerkzeugmaschine über schwingungsentkoppelnde Bauteile anzubinden.

Weitere Vorteile und zweckmäßige Ausführungen sind den weiteren Ansprüchen, der Figurenbeschreibung und den Zeichnungen zu entnehmen. Es zeigen:
- Fig. 1: einen Antriebsmotor als Bestandteil einer Schleifhandwerkzeugmaschine, wobei am Polgehäuse des Motors über den Umfang sowie in Achsrichtung verteilt mehrere als Blöcke ausgeführte Dämpfungselemente zur Abstützung gegenüber einem Maschinengehäuse angeordnet sind,
- Fig. 2: die als Blöcke ausgeführten Dämpfungselemente in perspektivischer Einzelansicht,
- Fig. 3: eine Fig. 1 entsprechende Darstellung, jedoch mit den Dämpfungselementen an einem verbindenden Trägerring,
- Fig. 4: der Trägerring mit den Dämpfungselementen in Einzeldarstellung,
- Fig. 5: eine Schnittdarstellung des Motorgehäuses mit an der Außenseite des Motorgehäuses angeordneten Dämpfungselementen,
- Fig. 6: das Motorgehäuse mit Aufnahmevorrichtungen, in die ein radial herausragender Zentrierstift zur Fixierung der Dämpfungselemente eingebracht ist,
- Fig. 7: das Maschinengehäuse der Schleifhandwerkzeugmaschine mit Aufnahmevorrichtungen zur Aufnahme der Dämpfungselemente,
- Fig. 8: eine ähnliche Darstellung wie Fig. 7, jedoch mit eingesetzten Dämpfungselementen, die an einem umlaufenden Trägerring gehalten sind,
- Fig. 9: die Schleifhandwerkzeugmaschine mit eingesetztem Antriebsmotor, der gegenüber dem Maschinengehäuse über die Dämpfungselemente abgestützt ist,
- Fig. 10: die Schleifhandwerkzeugmaschine in einem Horizontalschnitt.

In den Figuren sind gleiche Bauteile mit gleichen Bezugszeichen versehen.

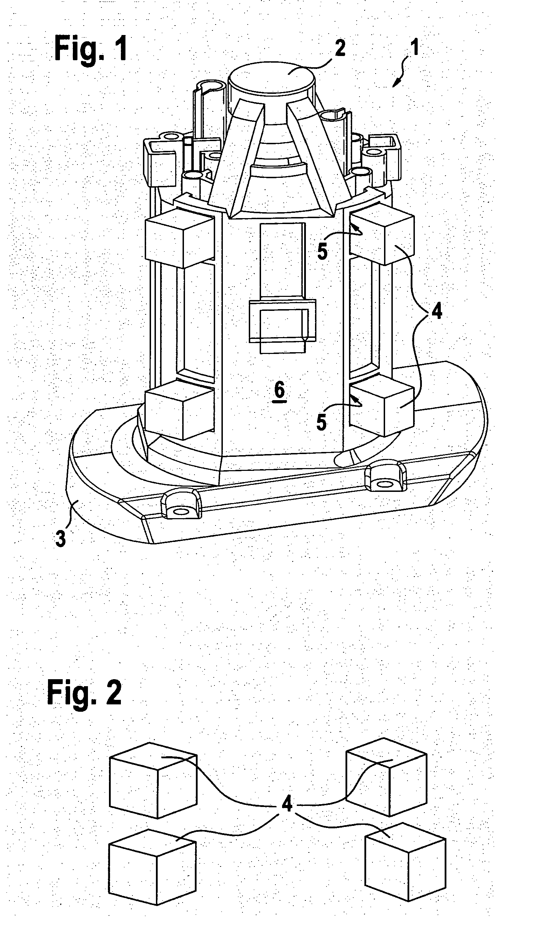

In Fig. 1 ist ein elektrischer Antriebsmotor 1 dargestellt, der zum Antreiben eines Werkzeugs beispielsweise in einer Schleifhandwerkzeugmaschine eingesetzt wird. Der elektrische Antriebsmotor 1 weist ein Motor- bzw. Polgehäuse 2 auf, das im Fußbereich mit einer Flanschgeometrie 3 verbunden ist, welche das Schleifwerkzeug umgreift. Über die Flanschgeometrie 3 wird das Motorgehäuse 2 mit einer Abdeck- bzw. Absaughaube verbunden, die als separates Bauteil ausgeführt ist. Die Flanschgeometrie 3 übernimmt zusätzliche Funktionen für die Staubabsaugung.

In die Mantelfläche 6 des Polgehäuses 2 sind Aufnahmevorrichtungen 5 eingebracht, die zur Aufnahme von Dämpfungselementen 4 dienen, über die das Polgehäuse 2 gegenüber einem Maschinengehäuse der Schleifhandwerkzeugmaschine abgestützt ist. Zweckmäßigerweise erfolgt die mechanische Kopplung zwischen dem Polgehäuse 2 und dem Maschinengehäuse ausschließlich über die Dämpfungselemente 4 an der Mantelfläche 6 des Polgehäuses 2. Die Aufnahmevorrichtungen 5 sind als Vertiefungen im Polgehäuse 2 ausgebildet, in die die quaderförmigen Dämpfungselemente 4 (Fig. 2) eingesetzt werden können. Der Querschnitt der Vertiefungen ist an den Querschnitt der Dämpfungselemente 4 angepasst, welche Quaderblöcke aus einem gummielastischen Material, beispielsweise einem PUR-Elastomer wie Cellasto bilden. Aufgrund der vertieften Ausführung der Aufnahmevorrichtungen 5 in dem Polgehäuse 2 sind die quaderförmigen Dämpfungselemente 4 sowohl in Richtung der Längsachse des Antriebsmotors als auch in Querrichtung formschlüssig aufgenommen. Des Weiteren sind die Dämpfungselemente 4 in Radialrichtung auf den Antriebsmotor 1 sicher in den Aufnahmevorrichtungen 5 gehalten.

Insgesamt sind über den Umfang sowie in Achsrichtung verteilt eine Mehrzahl einzelner quaderförmiger Dämpfungselemente 4 an der Mantelfläche 6 des Polgehäuses 2 angeordnet. Zweckmäßigerweise befinden sich an jedem axialen Ende mehrere über den Umfang verteilte Dämpfungselemente 4.

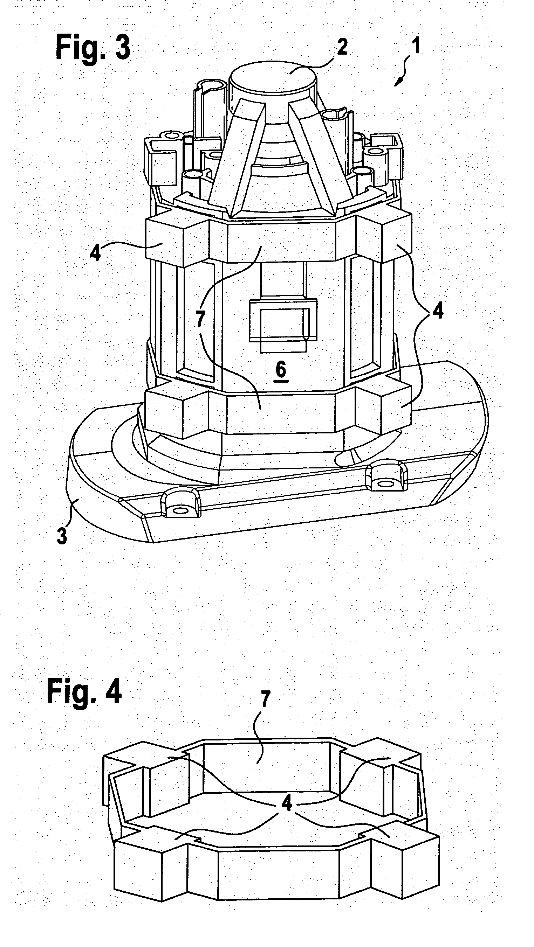

Im Ausführungsbeispiel gemäß den Fig. 3 und 4 sind die quader- bzw. blockförmigen Dämpfungselemente 4 an einem Trägerring 7 gehalten. Der Trägerring 7 mit den Dämpfungselementen 4 wird um den Umfang des Polgehäuses 2 gelegt. Am Trägerring 7 sind eine Mehrzahl von Dämpfungselementen 4 gehalten, im Ausführungsbeispiel befinden sich vier Dämpfungselemente 4 an dem Trägerring 7. Aufgrund der manschettenartigen Ausführung von Trägerring 7 und Dämpfungselement 4 kann auf Aufnahmevorrichtungen 5 im Polgehäuse 2 verzichtet werden. Der Trägerring 7 und das Dämpfungselement 4 können einteilig ausgeführt sein und bestehen in dieser Ausführung aus dem gleichen Material. Grundsätzlich möglich ist aber auch eine Ausführung aus unterschiedlichen Materialien, wobei in diesem Fall die Dämpfungselemente 4 beispielsweise an den Trägerring 7 angespritzt sind.

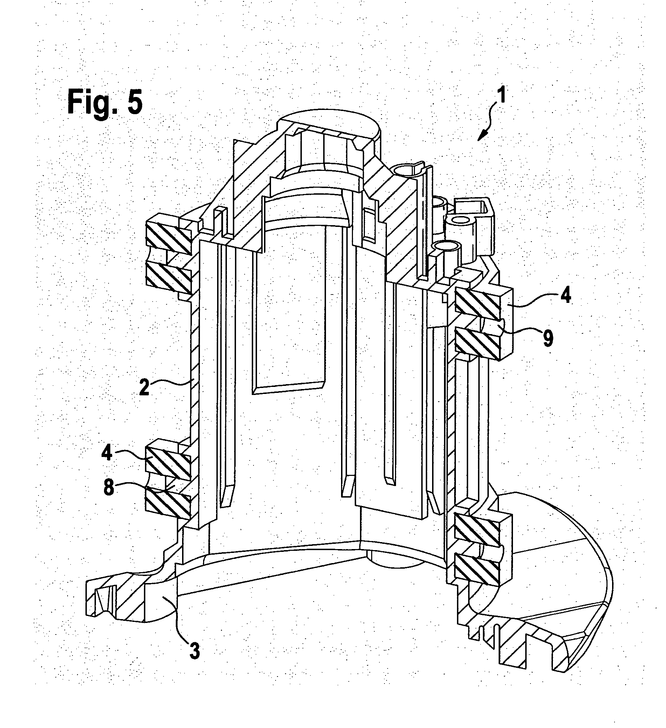

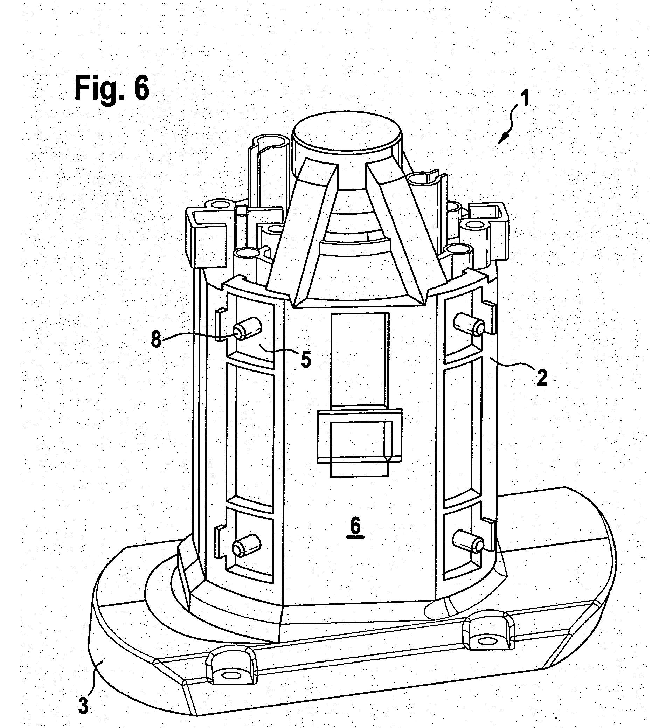

Im Ausführungsbeispiel gemäß den Fig. 5 und 6 sind in die Mantelfläche 6 des Polgehäuses 2 des elektrischen Antriebsmotors 1 Aufnahmevorrichtungen 5 eingebracht, die zur Aufnahme der blockförmigen Dämpfungselemente 4 dienen. In jeder Aufnahmevorrichtung 5 befindet sich ein einteilig mit dem Polgehäuse 2 ausgebildeter Zentrierstift 8, der radial herausragt.

Jedes Dämpfungselement 4 besitzt eine zentrale Ausnehmung 9, mit der das Dämpfungselement auf den Zentrierstift 8 aufgeschoben wird. Damit besteht nicht nur eine formschlüssige Aufnahme der Dämpfungselemente 4 innerhalb der Aufnahmevorrichtungen 5, welche als Vertiefung in der Mantelfläche 6 ausgeführt sind, sondern zusätzlich eine Sicherung der Dämpfungselemente 4 über den Zentrierstift 8.

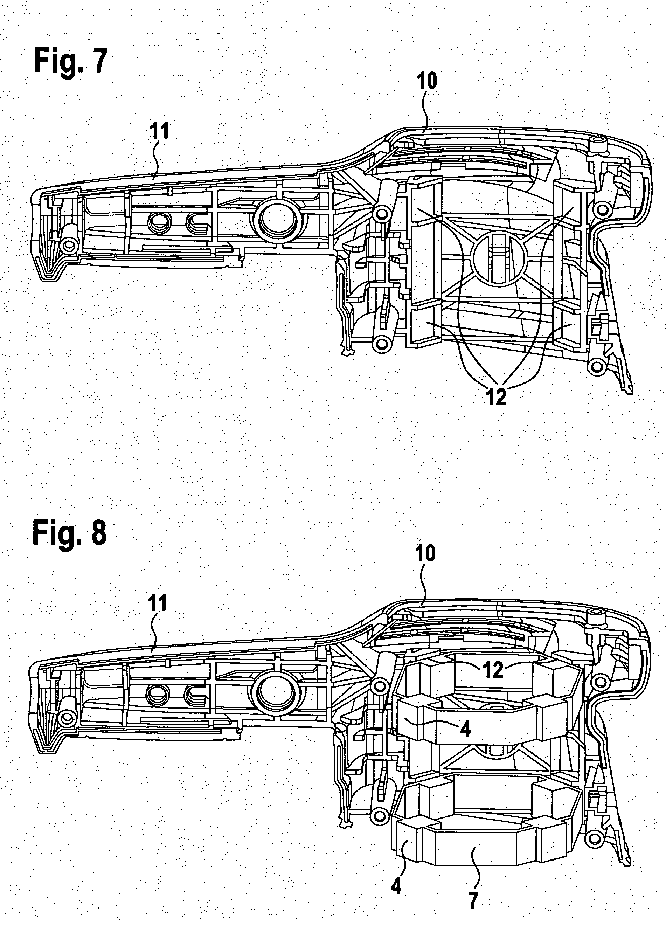

In den Fig. 7 und 8 ist das Maschinengehäuse 10 dargestellt, in das der elektrische Antriebsmotor eingesetzt wird. Einteilig mit dem Maschinengehäuse 10 ist der Handgriff 11 ausgeführt, über den die Schleifhandwerkzeugmaschine zu halten und zu führen ist. Auf der Innenseite des Maschinengehäuses 10 befinden sich Aufnahmevorrichtungen 12 zur Aufnahme der Dämpfungselemente 4. Die Aufnahmevorrichtungen 12 sind grundsätzlich in gleicher Weise aufgebaut wie die Aufnahmevorrichtungen 5 an der Mantelfläche des Polgehäuses. Die Aufnahmevorrichtungen 12 sind als Vertiefungen ausgeführt und dienen zur formschlüssigen Sicherung der Dämpfungselemente am Maschinengehäuse 10. Möglich ist aber auch die umgekehrte Ausführung, bei der die Entkoppelungselemente Vertiefungen aufweisen und das Gehäuse eine erhabene Gegengeonetrie.

Wie Fig. 8 zu entnehmen, sind die Dämpfungselemente 4 am Trägerring 7 gehalten und ragen mit ihrem radial äußeren Teil in die Vertiefungen der Aufnahmevorrichtungen 12 im Maschinengehäuse 10 ein. Mit ihrem radial innen liegenden Teil ragen die Dämpfungselemente 4 in entsprechender Weise in die Aufnahmevorrichtungen 5 in der Mantelfläche 6 des Polgehäuses ein, so wie dies beispielsweise in den Fig. 1 und 3 dargestellt ist.

In den Fig. 7 und 8 ist eine Gehäusehalbschale des Maschinengehäuses dargestellt. Das Maschinengehäuse setzt sich im fertig montierten Zustand aus zwei zusammenzufügenden Gehäusehalbschalen zusammen.

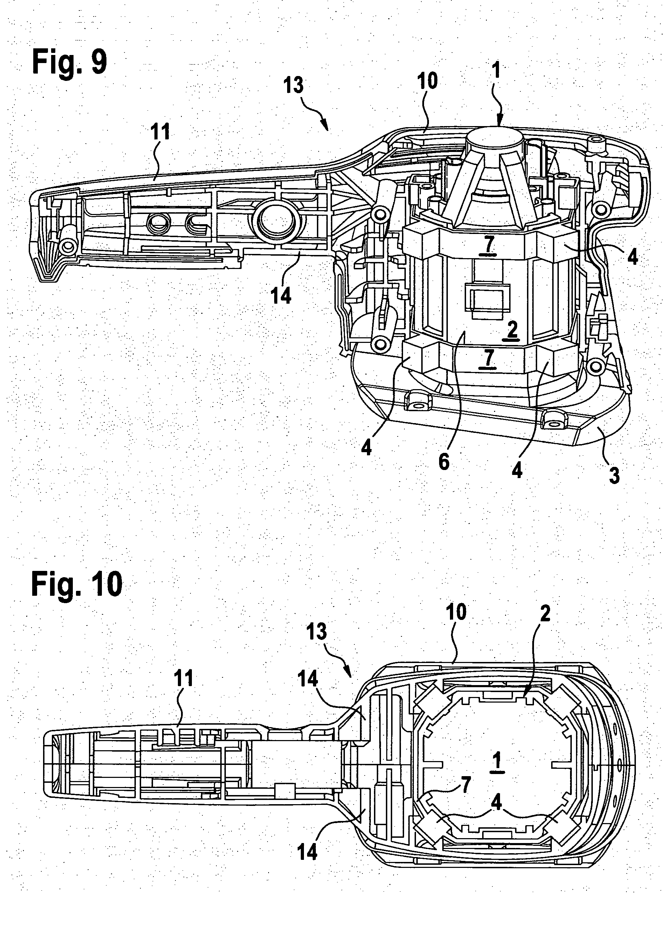

In den Fig. 9 und 10 ist die Schleifhandwerkzeugmaschine 13 mit in das Maschinengehäuse 10 integriertem Antriebsmotor 1 dargestellt. In Fig. 9 ist lediglich eine Gehäusehalbschale 14 dargestellt, wohingegen in Fig. 10 beide Gehäusehalbschalen 14 zu dem Maschinengehäuse 10 zusammengesetzt sind. Die Dämpfungselemente 4 sind wie beim vorhergehenden Ausführungsbeispiel am Trägerring 7 gehalten und um die Mantelfläche 6 des Polgehäuses 2 gelegt. Der Antriebsmotor 1 ist ausschließlich über die Dämpfungselemente 4 im Maschinengehäuse 10 gehalten.

## Patentansprüche

1. Handwerkzeugmaschine, insbesondere Schleifgerät wie beispielsweise Exzenterschleifer oder Schwingschleifer, mit einem im Maschinengehäuse (10) gehaltenen Antriebsmotor (1) zum Antreiben eines Werkzeugs und mit einem im Maschinengehäuse (10) aufgenommenen Dämpfungselement (4) zur Schwingungsreduzierung, wobei über den Umfang verteilt mehrere Dämpfungselemente (4) zwischen dem Motorgehäuse (2) und dem Maschinengehäuse (10) angeordnet sind und Trägerelemente zum Halten und Abstützen des Antriebsmotors (1) im Maschinengehäuse (10) bilden, **dadurch gekennzeichnet, dass** mindestens ein Dämpfungselement (4) als kompakter Dämpfungsblock ausgebildet ist und die Dämpfungselemente (4) an einem verbindenden Trägerring (7) gehalten sind.

2. Handwerkzeugmaschine nach Anspruch 1, **dadurch gekennzeichnet, dass** der Antriebsmotor (1) ausschließlich über Dämpfungselemente (4) im Maschinengehäuse (10) gehalten ist.

3. Handwerkzeugmaschine nach Anspruch 1 oder 2, **dadurch gekennzeichnet, dass** der Dämpfungsblock (4) als Mehrkantblock ausgebildet ist.

4. Handwerkzeugmaschine nach einem der Ansprüche 1 bis 3, **dadurch gekennzeichnet, dass** mindestens ein Dämpfungselement (4) in einer Aufnahmevorrichtung (5) im Motorgehäuse (2) und/oder dem Maschinengehäuse (10) aufgenommen ist.

5. Handwerkzeugmaschine nach einem der Ansprüche 1 bis 4, **dadurch gekennzeichnet, dass** mindestens ein Dämpfungselement (4) eine Ausnehmung (9) aufweist, über die das Dämpfungselement (4) auf einen Zentrierstift (8) aufschiebbar ist.

6. Handwerkzeugmaschine nach einem der Ansprüche 1 bis 5, **dadurch gekennzeichnet, dass** über das Dämpfungselement (4) eine Vibrationsentkopplung in mindestens zwei verschiedene Richtungen gegeben ist.

7. Handwerkzeugmaschine nach einem der Ansprüche 1 bis 6, **dadurch gekennzeichnet, dass** das Dämpfungselement (4) aus einem gummielastischen Material besteht.

## Claims

1. Hand-held power tool, in particular a sanding appliance such as, for example, a random-orbit sander or an oscillating sander, having a drive motor (1), held in the machine casing (10), for driving a tool, and having a damping element (4), received in the machine casing (10), for reducing oscillations, wherein a plurality of damping elements (4), distributed over the circumference, are disposed between the motor casing (2) and the machine casing (10) and constitute carrier elements for holding and supporting the drive motor (1) in the machine casing (10), **characterized in that** at least one damping element (4) is realized as a compact damping block and the damping elements (4) are held on a connecting carrier ring (7).

2. Hand-held power tool according to Claim 1, **characterized in that** the drive motor (1) is held exclusively by means of damping elements (4) in the machine casing (10).

3. Hand-held power tool according to claim 1 or 2, **characterized in that** the damping block (4) is realized as a polygonal block.

4. Hand-held power tool according to any one of Claims 1 to 3, **characterized in that** at least one damping element (4) is received in a receiving device (5) in the motor casing (2) and/or in the machine casing (10).

5. Hand-held power tool according to any one of Claims 1 to 4, **characterized in that** at least one damping element (4) has a recess (9), by means of which the damping element (4) can be slid on to a centering pin (8).

6. Hand-held power tool according to any one of claims 1 to 5, **characterized in that**, by means of the damping element (4), vibration decoupling is achieved in at least two differing directions.

7. Hand-held power tool according to any one of Claims 1 to 6, **characterized in that** the damping element (4) is composed of a rubber-elastic material.

## Revendications

1. Machine-outil à main, en particulier appareil de ponçage comme par exemple une ponceuse excentrique ou une ponceuse orbitale, comprenant un moteur d'entraînement (1) maintenu dans un boîtier de machine (10) pour l'entraînement d'un outil et comprenant un élément d'amortissement (4), reçu dans le boîtier de machine (10), pour la réduction des vibrations, plusieurs éléments d'amortissement (4) étant disposés de manière répartie sur la périphérie entre le boîtier de moteur (2) et le boîtier de machine (10) et formant des éléments de support pour maintenir et supporter le moteur d'entraînement (1) dans le boîtier de machine (10), **caractérisée en ce qu'**au moins un élément d'amortissement (4) est réalisé sous forme de bloc d'amortissement compact et les éléments d'amortissement (4) sont maintenus sur une bague de support de liaison (7).

2. Machine-outil à main selon la revendication 1, **caractérisée en ce que** le moteur d'entraînement (1) est maintenu dans le boîtier de machine (10) exclusivement au moyen d'éléments d'amortissement (4).

3. Machine-outil à main selon la revendication 1 ou 2, **caractérisée en ce que** le bloc d'amortissement (4) est réalisé sous forme de bloc polygonal.

4. Machine-outil à main selon l'une quelconque des revendications 1 à 3, **caractérisée en ce qu'**au moins un élément d'amortissement (4) est reçu dans un dispositif de réception (5) dans le boîtier de moteur (2) et/ou dans le boîtier de machine (10).

5. Machine-outil à main selon l'une quelconque des revendications 1 à 4, **caractérisée en ce qu'**au moins un élément d'amortissement (4) comprend un évidement (9) au moyen duquel l'élément d'amortissement (4) peut être glissé sur une douille de centrage (8).

6. Machine-outil à main selon l'une quelconque des revendications 1 à 5, **caractérisée en ce qu'**un découplage des vibrations dans au moins deux directions différentes est obtenu au moyen de l'élément d'amortissement (4).

7. Machine-outil à main selon l'une quelconque des revendications 1 à 6, **caractérisée en ce que** l'élément d'amortissement (4) est constitué d'un matériau présentant l'élasticité du caoutchouc.
